# EUROPÄISCHE PATENTSCHRIFT

(11) **EP 3 710 689 B1**
(45) Veröffentlichungstag und Bekanntmachung des Hinweises auf die Patenterteilung: **10.11.2021**
(21) Anmeldenummer: 18773753.1
(22) Anmeldetag: 20.09.2018
(51) Int. Cl.: F02M 55/02, F02M 61/14

(54) **SCHWINGUNGSDÄMPFUNGSANORDNUNG FÜR EINSPRITZANLAGEN VON KRAFTFAHRZEUGEN, INSBESONDERE FÜR BRENNSTOFFEINSPRITZSYSTEME, UND EINSPRITZANLAGE MIT SOLCH EINER SCHWINGUNGSDÄMPFUNGSANORDNUNG**
VIBRATION DAMPING ARRANGEMENT FOR INJECTION SYSTEMS OF MOTOR VEHICLES, IN PARTICULAR FOR FUEL INJECTION SYSTEMS, AND INJECTION SYSTEM COMPRISING A VIBRATION DAMPING ARRANGEMENT OF SAID TYPE
ENSEMBLE D'AMORTISSEMENT DE VIBRATIONS POUR DES SYSTÈMES D'INJECTION DE VÉHICULES AUTOMOBILES, EN PARTICULIER POUR DES SYSTÈMES D'INJECTION DE CARBURANT, ET SYSTÈME D'INJECTION COMPRENANT UN TEL ENSEMBLE D'AMORTISSEMENT DE VIBRATIONS

(30) Priorität: 15.11.2017 DE 102017220328
(43) Veröffentlichungstag der Anmeldung: 23.09.2020
(73) Patentinhaber: Robert Bosch GmbH, 70442 Stuttgart (DE)
(72) Erfinder: REHWALD, Andreas, 74321 Bietigheim-Bissingen (DE); WEBER, Ralf, 75015 Bretten (DE)
(86) Internationale Anmeldenummer: PCT/EP2018/075468
(87) Internationale Veröffentlichungsnummer: WO 2019/096467

(56) Entgegenhaltungen:
- EP-A2- 1 918 908
- US-A- 5 613 009

## Beschreibung

### Stand der Technik

Die Erfindung betrifft eine Schwingungsdämpfungsanordnung für Einspritzanlagen von Kraftfahrzeugen, insbesondere Brennstoffeinspritzanlagen, wobei zumindest ein Zumessventil mit einer Fluid führenden Komponente verbunden ist. Speziell betrifft die Erfindung das Gebiet der Brennstoffeinspritzanlagen für gemischverdichtende, fremdgezündete Brennkraftmaschinen.

Aus der US 2010/0071664 A1 ist eine Vorrichtung zur Reduktion von Geräuschen für eine Brennstoffeinspritzanlage bekannt. Hierbei werden durch Vibrationen eines Brennstoffrails verursachte Geräusche reduziert. Hierfür ist ein Isolationselement vorgesehen, das beispielsweise zwischen einem Halter und einem Zylinderkopf oder einer Tasse und dem Zylinderkopf angeordnet ist. Der Isolator kann aus Gummi, aus einem Elastomer, einem synthetischen Polymer oder dergleichen gebildet sein. Durch den Isolator ergibt sich eine Dämpfung der Vibrationsübertragung auf den Zylinderkopf.

Die Reduzierung von Motorgeräuschen ist heute nicht nur in Bezug auf aus dem Fahrzeuginnenraum wahrnehmbare Geräusche bedeutend. Im Rahmen eines Verkaufsgesprächs können von einem Kunden insbesondere bei geöffneter Motorhaube bestimmte Motorgeräusche als unerwünscht wahrgenommen werden, wenn sich der Motor im Leerlauf befindet. Dies betrifft insbesondere metallische Kontaktflächen bei der Aufhängung der Brennstoffeinspritzventile. Ferner kann davon ausgegangen werden, dass mit steigendem Brennstoffdruck solche unerwünschten Geräusche zumindest subjektiv lauter wahrgenommen werden.

Aus der EP 1 918 908 A2 ist bereits eine Schwingungsdämpfungsanordnung für Einspritzanlagen von Kraftfahrzeugen mit zumindest einem aktiv ansteuerbaren Aktuatorelement, das an einer Komponente der Einspritzanlage angeordnet ist, bekannt. Das Aktuatorelement ist dabei so an der Komponente angeordnet, dass im Betrieb der Einspritzanlage mittels einer aktiven Ansteuerung des Aktuatorelements eine Schwingungsreduktion der Einspritzanlage erzielbar ist. Dabei ist eine Steuerung vorgesehen, die im Betrieb der Einspritzanlage zur aktiven Ansteuerung des Aktuatorelements dient. Die Steuerung ist so ausgestaltet, dass im Betrieb der Einspritzanlage mittels der aktiven Ansteuerung des Aktuatorelements eine Schwingungsreduktion der Einspritzanlage erzielt ist, die eine Dämpfung einer Schallabstrahlung der Einspritzanlage und/oder eine Reduzierung zumindest einer Vibrationslast der Einspritzanlage ermöglicht. Das Aktuatorelement ist in Form eines piezoelektrischen Elements zwischen einer unteren Gehäuseschulter eines Injektors und einer Absatzfläche einer Aufnahmebohrung für den Injektor des Zylinderkopfs eingebracht.

### Offenbarung der Erfindung

Die erfindungsgemäße Schwingungsdämpfungsanordnung mit den Merkmalen des Anspruchs 1 und die erfindungsgemäße Einspritzanlage mit den Merkmalen des Anspruchs 10 haben den Vorteil, dass eine verbesserte Reduzierung von Geräuschen ermöglicht ist. Insbesondere kann im Unterschied zu passiven Maßnahmen zur Schwingungsdämpfung, wie sie durch passive Isolierelemente realiserbar sind, eine Dämpfung in anderen und/oder breiteren Frequenzbereichen ermöglicht werden.

Durch die in den Unteransprüchen aufgeführten Maßnahmen sind vorteilhafte Weiterbildungen der im Anspruch 1 angegebenen Schwingungsdämpfung und der im Anspruch 7 angegebenen Einspritzanlage möglich.

Die Komponente, an der das aktiv ansteuerbare Aktuatorelement angeordnet ist, kann als Fluid führende Komponente, als Zumessventil, als Halter, als Anbauteil oder als sonstiges Teil der Einspritzanlage ausgestaltet sein. Hierbei können auch mehrere aktiv ansteuerbare Aktuatorelemente vorgesehen sein, die nicht notwendigerweise an einer einzelnen Komponente angeordnet sind. Hierdurch kann in Bezug auf den jeweiligen Anwendungsfall eine optimale Schwingungsreduktion in Bezug auf einen gegebenen Aufwand, insbesondere die Anzahl an Aktuatorelementen und den diesbezüglichen Anforderungen an die Steuerung, realisiert werden. Beispielsweise kann bei einer Einspritzanlage mit mehreren Zumessventilen jedem Zumessventil ein aktiv ansteuerbares Aktuatorelement zugeordnet sein. Insbesondere kann in jede für ein Zumessventil dienende Aufhängung ein aktiv ansteuerbares Aktuatorelement eingebaut werden.

Speziell eignen sich die Schwingungsdämpfungsanordnung und die Einspritzanlage für Anwendungen zur Brennstoffeinspritzung, insbesondere Benzindirekteinspritzung. Eine Fluid führende Komponente ist dann als Brennstoff führende Komponente ausgebildet. Ein Zumessventil ist dann als Brennstoffeinspritzventil ausgebildet. Die anhand dieser bevorzugten Anwendungen angegebenen Vorteile und Weiterbildung können aber in entsprechender Weise auch allgemein bei Einspritzanlagen und bei Schwingungsdämpfungsanordnungen für Einspritzanlagen von Kraftfahrzeugen zur Anwendung kommen.

Die Brennstoff führende Komponente ist hierzu vorzugsweise als Brennstoffverteiler, insbesondere als Brennstoffverteilerleiste, ausgebildet. Solch ein Brennstoffverteiler kann zum einen zur Verteilung des Brennstoffs auf mehrere Brennstoffeinspritzventile, insbesondere Hochdruckeinspritzventile, dienen. Zum anderen kann der Brennstoffverteiler als gemeinsamer Brennstoffspeicher für die Brennstoffeinspritzventile dienen. Die Brennstoffeinspritzventile sind dann vorzugsweise über sich entsprechende Aufhängungen mit dem Brennstoffverteiler verbunden. Im Betrieb spritzen die Brennstoffeinspritzventile den zum Verbrennungsvorgang notwendigen Brennstoff dann unter hohem Druck in den jeweiligen Verbrennungsraum ein. Der Brennstoff wird hierbei über eine Hochdruckpumpe verdichtet und mengengesteuert über eine Hochdruckleitung in den Brennstoffverteiler gefördert.

Während passive Schwingungsdämpfungssysteme sich in ihrem Wirkungsbereich häufig nur auf bestimmte Frequenzbereiche einstellen lassen, was durch konstruktive oder werkstofftechnische Maßnahmen möglich ist, kann die Schwingungsdämpfungsanordnung mit ein oder mehreren aktiv ansteuerbaren Aktuatorelementen, insbesondere über weite Frequenzbereiche, eine effektive Schwingungsdämpfung erreichen. Eine aktive Regelung ermöglicht werden, wobei in vorteilhafter Weise Steifigkeits- und/oder Wegänderungen auf die momentan vorliegende Betriebssituation angepasst werden können. Somit kann beispielsweise im befeuerten Betrieb eines Verbrennungsmotors eine effektive Schwingungsdämpfung erzielt werden. Das Aktuatorelement kann hierbei beispielsweise als piezoelektrisches Element realisiert werden. Weiterhin kann die aktiv ausgestaltete Schwingungsdämpfungsanordnung nicht nur zur Reduktion von Schwingungen und damit zusammenhängender Schallabstrahlung dienen, sondern auch eine Erfassung des aktuellen Systemzustandes ermöglichen. Beispielsweise kann eine Verringerung der Systemsteifigkeit, die beispielsweise durch Versagen eines Halters verursacht ist, erkannt werden. Beispielsweise können auch Veränderungen an aktiven Elementen, insbesondere eines Zumessventils, wie beispielsweise ein Verschleiß, erfasst werden. Mittels der Steuerung können somit auch auftretende Fehler erkannt werden. In Bezug auf die Ansteuerung ergeben sich somit ferner Vorteile bei einer Weiterbildung nach Anspruch 2.

Vorteilhafte Anordnungen zumindest eines aktiv ansteuerbaren Aktuatorelements sind gemäß den Ansprüchen 3 bis 6 möglich. Hierbei können Schwingungsreduktionen entsprechend einer parallelen, seriellen und/oder absoluten Integration in ein Feder-Masse-Dämpfersystem erzielt werden.

Eine Schwingungsdämpfungsanordnung für eine Brennstoffeinspritzanlage mit einem Brennstoffverteiler, insbesondere einer Brennstoffverteilerleiste, ermöglicht werden. Somit kann insbesondere eine aktive Schwingungsregelung realisiert werden, die eine gezieltere und effektivere Dämpfung der Schallabstrahlung im Vergleich zu herkömmlichen passiven Maßnahmen ermöglicht, wobei gegebenenfalls zusätzlich eine Überwachung der Struktur und somit eine Früherkennung bezüglich möglicher Ausfälle ermöglicht wird. Hierdurch ist auch eine intelligente akustische Überwachung und/oder eine Lastdatenerfassung im Betrieb denkbar, wodurch auch Anwendungen zur Weiterentwicklung der Auslegung möglich sind. Ferner ist es denkbar, dass auf diese Weise auslegungsrelevante Vibrationslasten gezielt unterdrückt werden.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigen:
Fig. 1 eine Schwingungsdämpfungsanordnung entsprechend einer ersten möglichen Ausgestaltung in einer schematischen Darstellung, wobei ein aktiv ansteuerbares Aktuatorelement parallel in ein Feder-Masse-Dämpfungssystem integriert ist;
Fig. 2 eine Schwingungsdämpfungsanordnung entsprechend einer zweiten möglichen Ausgestaltung in einer schematischen Darstellung, wobei ein aktiv ansteuerbares Aktuatorelement seriell in ein Feder-Masse-Dämpfungssystem integriert ist;
Fig. 3 eine Schwingungsdämpfungsanordnung entsprechend einer dritten möglichen Ausgestaltung in einer schematischen Darstellung, wobei ein aktiv ansteuerbares Aktuatorelement auf absolute Weise in ein Feder-Masse-Dämpfungssystem integriert ist;
Fig. 4 ein Ausführungsbeispiel für eine Einspritzanlage in einer auszugsweisen, schematischen Darstellung gemäß der ersten möglichen Ausgestaltung der Schwingungsdämpfungsanordnung;
Fig. 5 ein Ausführungsbeispiel für eine Einspritzanlage in einer auszugsweisen, schematischen Darstellung gemäß der zweiten möglichen Ausgestaltung der Schwingungsdämpfungsanordnung und
Fig. 6 ein Ausführungsbeispiel für eine Einspritzanlage in einer auszugsweisen, schematischen Darstellung gemäß der dritten möglichen Ausgestaltung der Schwingungsdämpfungsanordnung.

### Ausführungsformen der Erfindung

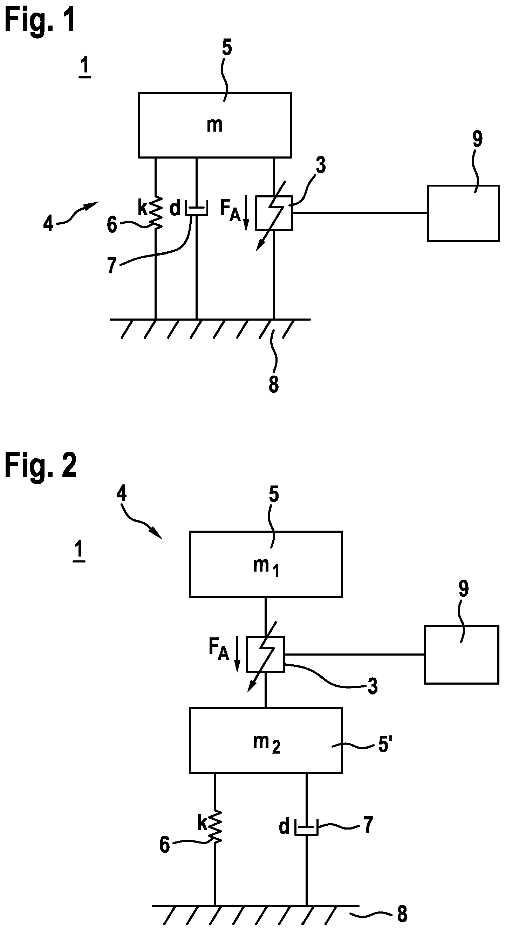

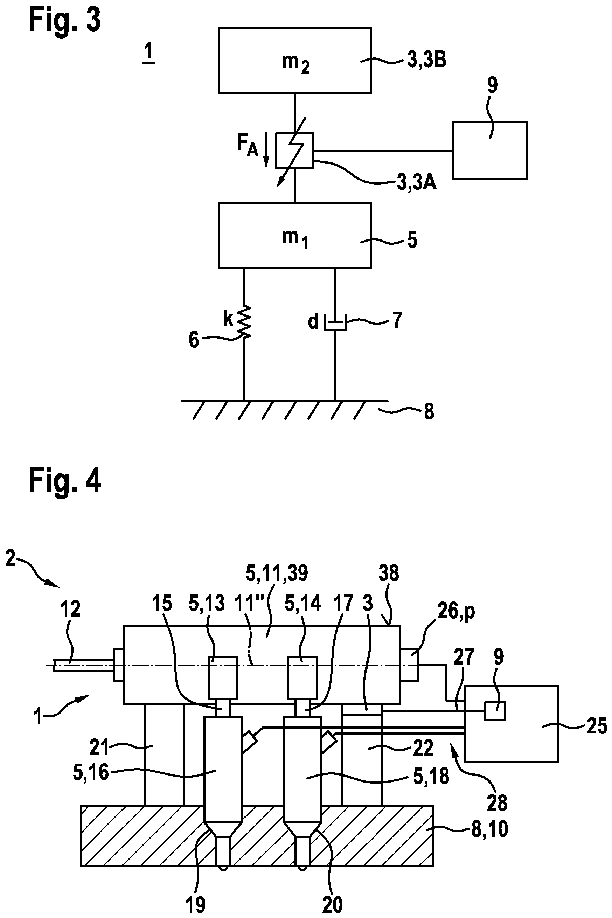

Fig. 1 zeigt eine Schwingungsdämpfungsanordnung 1 für eine Einspritzanlage 2 (Fig. 4) eines Kraftfahrzeugs entsprechend einer ersten möglichen Ausgestaltung in einer schematischen Darstellung. Bei dieser Ausgestaltung ist ein aktiv ansteuerbares Aktuatorelement 3 der Schwindungsdämpfungsanordnung 1 parallel in ein Feder-Masse-Dämpfungssystem 4 integriert.

Das Feder-Masse-Dämpfungssystem 4 weist eine Komponente 5 mit einer Masse m, eine Feder 6 mit einer Federkonstante k und einen Dämpfer 7 mit der Dämpfung d auf. Bei der ersten Ausgestaltung ist das Aktuatorelement 3 parallel zu der Feder 6 und dem Dämpfer 7 zwischen die Komponente 5 und einem Festlager 8 angeordnet. Die Schwingungsdämpfungsanordnung 1 weist außerdem eine Steuerung 9 auf, die zum Ansteuern des Aktuatorelements 3 dient.

Das Aktuatorelement 3 kann als Piezoelement 3 ausgestaltet sein. Denkbar ist auch eine induktive oder kapazitive oder auf anderen Wirkmechanismen funktionierende Ausgestaltung, die eine aktive Kraft- oder Wegänderung bei Anlegen eines äußeren Signals ermöglicht. Beispielsweise kann von dem Aktuatorelement 3 eine Kraft F_{A} in das Feder-Masse-Dämpfungssystem 4 eingebracht werden. In Bezug auf Betriebsgrößen, wie einen Druck p (Fig. 4) kann eine aktive Regelung realisiert werden. Somit ist eine aktive Schwingungsreduktion ermöglicht.

Fig. 2 zeigt eine Schwindungsdämpfungsanordnung 1 entsprechend einer zweiten möglichen Ausgestaltung in einer schematischen Darstellung, wobei das aktiv ansteuerbare Aktuatorelement 3 seriell in das Feder-Masse-Dämpfungssystem 4 integriert ist. Bei dieser Ausgestaltung sind eine Komponente 5 mit der Masse m₁ und eine Komponente 5' mit der Masse m₂ vorgesehen, zwischen denen das aktiv ansteuerbare Aktuatorelement 3 vorgesehen ist, das die Kraft F_{A} in das Feder-Masse-Dämpfungssystem 4 einbringen kann. Die Komponente 5' ist über die Feder 6 und den parallel zu der Feder 6 angeordneten Dämpfer 7 mit dem Festlager 8 verbunden.

Fig. 3 zeigt eine Schwingungsdämpfungsanordnung 1 entsprechend einer dritten möglichen Ausgestaltung in einer schematischen Darstellung, wobei das aktiv ansteuerbare Aktuatorelement 3 auf absolute Weise in das Feder-Masse-Dämpfungssystem 4 integriert ist. Hierbei ist das Aktuatorelement 3 in eine Kraftkomponente 3A und eine Massekomponente 3B mit der Masse m₂ aufgeteilt. Die Massekomponente 3B veranschaulicht in der schematischen Darstellung die Eigenmasse m₂ des Aktuatorelements 3. Die Kraftkomponente 3A veranschaulicht in der schematischen Darstellung die von dem Aktuatorelement 3 aufgebrachte Kraft F_{A}. Die Kraftkomponente 3A des Aktuatorelements 3 ist zwischen der Massekomponente 3B und der Komponente 5 mit der Masse m₁ angeordnet. Die Komponente 5 ist über die Feder 6 und den parallel zu der Feder 6 geschalteten Dämpfer 7 mit dem Festlager 8 verbunden.

Es versteht sich, dass die in den Fig. 1 bis 3 dargestellten Feder-Masse-Dämpfungssysteme 4 als vereinfachte Modelle zu verstehen sind. Insbesondere kann es im jeweiligen Anwendungsfall sinnvoll sein, mehrere aktiv ansteuerbare Aktuatorelemente 3 in ein Feder-Masse-Dämpfungssystem 4 zu integrieren. Hierbei kann eine weitere Aufteilung der Massen m, m₁, m₂ und entsprechend eine weitere Aufteilung der Feder 6 und des Dämpfers 7 sinnvoll sein. Entsprechend ist die Zuordnung der anhand der Fig. 4 bis 6 beschriebenen Ausführungsbeispiele zu den anhand der Fig. 1 bis 3 beschriebenen Feder-Masse-Dämpfungssysteme 4 als modellmäßige Vereinfachung zu verstehen.

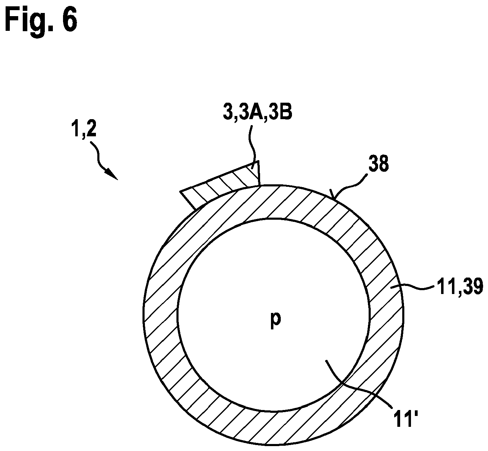

Fig. 4 zeigt ein Ausführungsbeispiel für eine Einspritzanlage 2 in einer auszugsweisen, schematischen Darstellung gemäß der anhand der Fig. 1 beschriebenen ersten möglichen Ausgestaltung der Schwingungsdämpfungsanordnung 1. Die Einspritzanlage 2 ist in diesem Ausführungsbeispiel an einem Zylinderkopf 10 einer Brennkraftmaschine eines Kraftfahrzeugs montiert, der hier das Festlager 8 darstellt. Die Einspritzanlage 2 weist eine Fluid führende Komponente 11 auf, die als Brennstoffverteiler 11 ausgestaltet ist. An dem Brennstoffverteiler 11 ist eine Zulaufleitung 12 angeschlossen, über die Brennstoff in einen Innenraum 11' (Fig. 6) des Brennstoffverteilers 11 geführt wird. An dem Brennstoffverteiler 11 sind Anschlussstücke 13, 14 vorgesehen. Ein Anschlussstutzen 15 eines Brennstoffeinspritzventils 16 ist in das Anschlussstück 13 eingefügt. Ferner ist ein Anschlussstutzen 17 eines Brennstoffeinspritzventils 18 in das Anschlussstück 14 eingefügt. Die Brennstoffeinspritzventile 16, 18 sind außerdem in geeignete Bohrungen 19, 20 des Zylinderkopfes 10 eingefügt.

Die Komponente 5 mit der Masse m wird in diesem Ausführungsbeispiel im Wesentlichen durch den Brennstoffverteiler 11, die Anschlussstücke 13, 14 und die Brennstoffeinspritzventile 16, 18 realisiert. Hierbei ist die Masse m über Halter 21, 22 mit dem Zylinderkopf 10 verbunden. Die Einspritzanlage 2 wird des weiteren vereinfacht über die Feder 6 mit der Federkonstante k und den Dämpfer 7 mit der Dämpfung d beschrieben. Das aktiv ansteuerbare Aktuatorelement 3 ist zwischen der Masse m und dem Halter 22 angeordnet. Beispielsweise kann das Aktuatorelement 3 auf geeignete Weise mit dem Brennstoffverteiler 11 verbunden werden. Das Aktuatorelement 3 kann auch in den Halter 22 integriert werden oder zwischen dem Halter 22 und dem Zylinderkopf 10 angeordnet werden.

Die Steuerung 9 kann in ein Einspritzsteuergerät 25 der Einspritzanlage 2 integriert sein. Das Einspritzsteuergerät 25 kann beispielsweise den Druck p im Inneren des Brennstoffverteilers 11 mittels eines an dem Brennstoffverteiler 11 angebrachten Drucksensors 26 erfassen. Ferner ist das Einspritzsteuergerät 25 mit den Brennstoffeinspritzventilen 16, 18 verbunden, um die Brennstoffeinspritzventile 16, 18 zur Einspritzung von Brennstoff anzusteuern. Eine elektrische Leitung 27, über die das Aktuatorelement 3 mit dem Einspritzsteuergerät 25 verbunden ist, kann in einen Kabelbaum 28 integriert sein, über den auch die elektrische Versorgung der Brennstoffeinspritzventile 16, 18 und des als Hochdrucksensors ausgebildeten Drucksensors 26 erfolgt. Algorithmen zur Regelung und die Anwendung dieser auf die aktuellen Systemzustände können von geeigneten und vorhandenen Rechnerkapazitäten, die zum Beispiel auf dem Einspritzsteuergerät 25 zur Verfügung stehen, übernommen werden.

Das Einspritzsteuergerät 25 ist in diesem Ausführungsbeispiel vorzugsweise als Motorsteuergerät 25 ausgebildet, in dem zahlreiche Funktionen zusammengefasst sind. Im Motorsteuergerät 25 laufen vorzugsweise alle entsprechenden Informationen, die zur aktiven Regelung genutzt werden können, zusammen. Dazu zählen zum Beispiel der Druck p im Brennstoffverteiler 11, eine Drehzahl einer Kurbelwelle des Motors sowie Informationen zu den Einspritzvorgängen der Einspritzventile 16, 18. Somit können ein oder mehrere Betriebsgrößen, insbesondere der Druck p, die Drehzahl einer Kurbelwelle des Motors sowie Informationen zu den Einspritzvorgängen der Einspritzventile 16, 18, erfasst und von der Steuerung 9 zur Ansteuerung zumindest eines Aktuatorelements 3 genutzt werden.

Das Aktuatorelement 3 weist eine geeignete Form auf. Beispielsweise kann das Aktuatorelement 3 mit einem rechteckigen Profil ausgestaltet sein. Insbesondere kann das Aktuatorelement 3 in Form eines Quaders ausgestaltet sein. Das Aktuatorelement 3 kann auch auf andere Weise, insbesondere auch zylinderförmig, ausgestaltet sein.

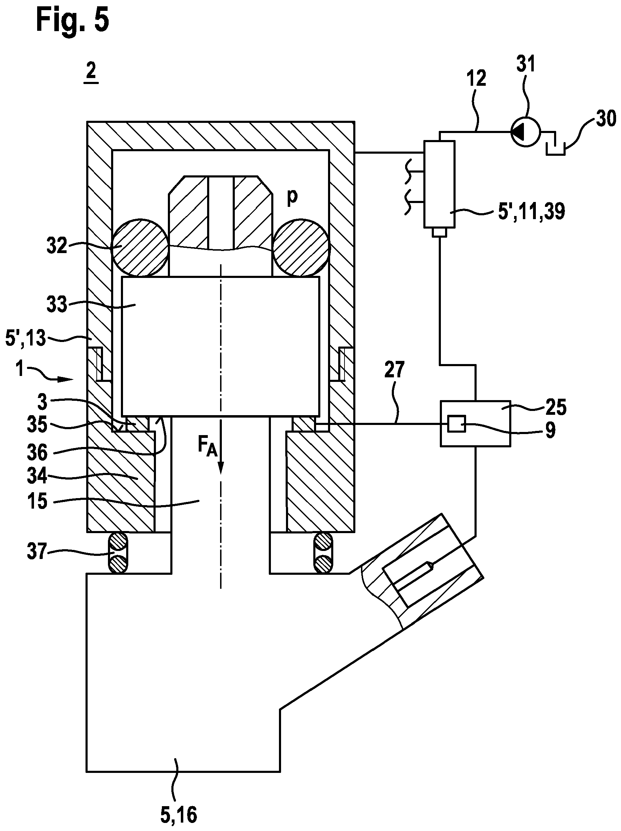

Fig. 5 zeigt ein Ausführungsbeispiel für eine Einspritzanlage 2 in einer auszugsweisen, schematischen Darstellung gemäß der anhand der Fig. 2 beschriebenen zweiten möglichen Ausgestaltung der Schwingungsdämpfungsanordnung 1. In diesem Ausführungsbeispiel wird Brennstoff aus einem Tank 30 über eine Pumpenanordnung 31 in den Brennstoffverteiler 11 gefördert. Ein Anschlussstutzen 15 des Brennstoffeinspritzventils 16 ist in dem Anschlussstück 13 des Brennstoffverteilers 11 angeordnet. Hierbei ist zwischen dem Anschlussstutzen 15 und dem Anschlussstück 13 mittels eines Dichtrings 32 eine Dichtung realisiert. Der Dichtring 32 stützt sich hierbei an einem Bund 33 des Anschlussstutzens 17 ab. Ferner ist an dem Anschlussstück 13 ein Bund 34 vorgesehen, an dem ein Absatz 35 ausgebildet ist. Zwischen dem Absatz 35 und einer dem Absatz 35 zugewandten Stirnseite 36 des Anschlussstücks 13 ist das Aktuatorelement 3 angeordnet. Das Aktuatorelement 3 kann hierbei beispielsweise als ringförmiges Aktuatorelement 3 mit einem rechteckigen Profil ausgestaltet sein.

In diesem Ausführungsbeispiel ist die Komponente 5 des Feder-Masse-Dämpfungssystems 4, das in Fig. 2 veranschaulicht ist, durch das Brennstoffeinspritzventil 16 mit dem Anschlussstutzen 15 gebildet. Die Komponente 5' ist durch den Brennstoffverteiler 11 und das Anschlussstück 13 gebildet. Es versteht sich, dass diese Aufteilung auf die Komponenten 5, 5' im Sinne einer vereinfachten, konkreten Darstellung zu verstehen ist, da die Einspritzanlage 2 hier vereinfacht durch die beiden Massen m₁, m₂, eine Federkonstante k, eine Dämpfung d sowie das darin integrierte Aktuatorelement 3 modelliert ist. Beispielsweise kann angenommen werden, dass kein direkter Kontakt zwischen dem Brennstoffeinspritzventil 16 und dem Zylinderkopf 10 besteht. Das Brennstoffeinspritzventil 16 wird dann beispielsweise über einen Halter 37 und über den Druck p des Brennstoffs gehalten. Der Brennstoffverteiler 11 ist auf geeignete Weise mit dem Zylinderkopf 10 (Fig. 4) verbunden, der das Festlager 8 darstellen kann.

Fig. 6 zeigt ein Ausführungsbeispiel für eine Einspritzanlage 2 in einer auszugsweisen, schematischen Darstellung gemäß der anhand der Fig. 3 beschriebenen dritten möglichen Ausgestaltung der Schwingungsdämpfungsanordnung 1. In diesem Ausführungsbeispiel ist das Aktuatorelement 3 an einer Außenseite 38 des Brennstoffverteilers 11 angebracht. Die Massekomponente 3B ist hierbei durch die Eigenmasse m₂ des Aktuatorelements 3 realisiert. Es ist allerdings auch denkbar, dass die Eigenmasse des Aktuatorelements 3 auf geeignete Weise erhöht ist, beispielsweise durch ein Gehäuseteil oder eine Zusatzmasse des Aktuatorelements 3.

Ferner kann es vorteilhaft sein, dass an dem Brennstoffverteiler 11 mehrere Aktuatorelemente 3 angeordnet sind, die beispielsweise entlang einer Längsachse 11" (Fig. 4) eines rohrförmigen Grundkörpers 39 des Brennstoffverteilers 11 angeordnet sind. Der Brennstoffverteiler 11 kann auf geeignete Weise mit dem Zylinderkopf 10 verbunden werden, der das Festlager 8 darstellt.

Bei einer Einspritzanlage 2 können ein oder mehrere der genannten Möglichkeiten zur Anordnung von Aktuatorelementen 3 realisiert werden. Hierbei können die unterschiedlichen Prinzipien zur Beeinflussung von Feder-Masse-Dämpfungssystemen 4 mit Aktuatorelementen 3 auf geeignete Weise kombiniert werden. In Prinzip kann an mehreren oder allen Kopplungsschnittstellen einer Einspritzanlage 2, an denen Strukturschwingungen übertragen werden, eine Beeinflussung des Feder-Masse-Dämpfungssystem 4 über zumindest ein Aktuatorelement 3 erfolgen. Ein Aktuatorelement 3 kann beispielsweise auch zwischen einem Halter 22 und dem Zylinderkopf 10 angeordnet werden. Ferner kann eine direkte Anordnung eines Aktuatorelements 3 auf schallabstrahlenden Flächen erfolgen, wie es anhand der Außenseite 38 des rohrförmigen Grundkörpers 39 beschrieben ist.

Die Erfindung ist nicht auf die beschriebenen Ausführungsformen beschränkt.

## Patentansprüche

1. Schwingungsdämpfungsanordnung (1) für Einspritzanlagen (2) von Kraftfahrzeugen mit zumindest einem aktiv ansteuerbaren Aktuatorelement (3), das an einer Komponente (5, 5') der Einspritzanlage (2) angeordnet ist, wobei das Aktuatorelement (3) so an der Komponente (5, 5') angeordnet ist, dass im Betrieb der Einspritzanlage (2) mittels einer aktiven Ansteuerung des Aktuatorelements (3) eine Schwingungsreduktion der Einspritzanlage (2) erzielt ist,
wobei eine Steuerung (9) vorgesehen ist, die im Betrieb der Einspritzanlage (2) zur aktiven Ansteuerung des Aktuatorelements (3) dient, und wobei die Steuerung (9) so ausgestaltet ist, dass im Betrieb der Einspritzanlage (2) mittels der aktiven Ansteuerung des Aktuatorelements (3) eine Schwingungsreduktion der Einspritzanlage (2) erzielt ist, die eine Dämpfung einer Schallabstrahlung der Einspritzanlage (2) und/oder eine Reduzierung zumindest einer Vibrationslast der Einspritzanlage (2) ermöglicht,
**dadurch gekennzeichnet,**
**dass** das aktiv ansteuerbare Aktuatorelement (3) zwischen dem Anschlussstück (13, 14) eines Brennstoffverteilers (11) und einem Anschlussstutzen (15, 17) eines Zumessventils (16, 18) angeordnet ist.

2. Schwingungsdämpfungsanordnung nach Anspruch 1,
**dadurch gekennzeichnet,**
**dass** ein Einspritzsteuergerät (25) für die Einspritzanlage (2) vorgesehen ist, das zum Ansteuern zumindest eines Zumessventils (16, 18) der Einspritzanlage (2) und/oder zum Erfassen zumindest einer Betriebsgröße (p) der Einspritzanlage (2) dient, dass die Steuerung (9) in das Einspritzsteuergerät (25) integriert ist und dass die Steuerung (9) das Aktuatorelement (3) in Abhängigkeit von der Ansteuerung des Zumessventils (16, 18) und/oder der Betriebsgröße (p) der Einspritzanlage (2) ansteuert.

3. Schwingungsdämpfungsanordnung nach Anspruch 1 oder 2,
**dadurch gekennzeichnet,**
**dass** der Anschlussstutzen (15, 17) des Zumessventils (16, 18) mittels des aktiv ansteuerbaren Aktuatorelements (3) an dem Anschlussstück (13, 14) des Brennstoffverteilers (11) aufgehängt ist.

4. Schwingungsdämpfungsanordnung nach einem der Ansprüche 1 bis 3,
**dadurch gekennzeichnet,**
**dass** ein aktiv ansteuerbares Aktuatorelement (3) frei an einer Außenseite (38) einer Fluid führenden Komponente (11) angeordnet ist.

5. Schwingungsdämpfungsanordnung nach einem der Ansprüche 1 bis 4,
**dadurch gekennzeichnet,**
**dass** ein aktiv ansteuerbares Aktuatorelement (3) abgestützt an einer Außenseite (38) einer Fluid führenden Komponente (11) und/oder an oder in einem Halter (22) der Einspritzanlage (2) angeordnet ist.

6. Schwingungsdämpfungsanordnung nach Anspruch 5,
**dadurch gekennzeichnet,**
**dass** das aktiv ansteuerbare Aktuatorelement (3) an einem mit einem Festlager (8) verbundenen Halter (22) oder an einem Festlager (8) abgestützt ist.

7. Einspritzanlage (2), die insbesondere für gemischverdichtende, fremdgezündete Brennkraftmaschinen dient, mit zumindest einer Fluid führenden Komponente (11), zumindest einer als Zumessventil (16, 18) ausgebildeten Komponente (5) und einer Schwingungsdämpfungsanordnung (1) nach einem der Ansprüche 1 bis 6.

## Claims

1. Vibration damping arrangement (1) for injection systems (2) of motor vehicles, having at least one actively controllable actuator element (3) which is arranged on a component (5, 5') of the injection system (2), wherein the actuator element (3) is arranged on the component (5, 5') such that, during the operation of the injection system (2), a reduction in vibrations of the injection system (2) is achieved by way of active control of the actuator element (3),
wherein a controller (9) is provided which serves for actively controlling the actuator element (3) during the operation of the injection system (2), and wherein the controller (9) is configured such that, during the operation of the injection system (2), a reduction in vibrations of the injection system (2) is achieved by way of the active control of the actuator element (3), which reduction in vibrations allows damping of sound radiation from the injection system (2) and/or a reduction at least of a vibration load of the injection system (2),
**characterized**
**in that** the actively controllable actuator element (3) is arranged between the connection piece (13, 14) of a fuel distributor (11) and a connection piece (15, 17) of a metering valve (16, 18).

2. Vibration damping arrangement according to Claim 1,
**characterized**
**in that** an injection control unit (25) for the injection system (2) is provided, which injection control unit serves for controlling at least one metering valve (16, 18) of the injection system (2) and/or for acquiring at least one operating variable (p) of the injection system (2), in that the controller (9) is integrated into the injection control unit (25), and in that the controller (9) controls the actuator element (3) in a manner dependent on the control of the metering valve (16, 18) and/or on the operating variable (p) of the injection system (2).

3. Vibration damping arrangement according to Claim 1 or 2,
**characterized**
**in that** the connection piece (15, 17) of the metering valve (16, 18) is mounted by means of the actively controllable actuator element (3) on the connection piece (13, 14) of the fuel distributor (11).

4. Vibration damping arrangement according to any one of Claims 1 to 3,
**characterized**
**in that** an actively controllable actuator element (3) is arranged freely on an outer side (38) of a fluid-conducting component (11).

5. Vibration damping arrangement according to any one of Claims 1 to 4,
**characterized**
**in that** an actively controllable actuator element (3) is arranged so as to be supported on an outer side (38) of a fluid-conducting component (11) and/or on or in a bracket (22) of the injection system (2).

6. Vibration damping arrangement according to Claim 5,
**characterized**
**in that** the actively controllable actuator element (3) is supported on a bracket (22) fixed to a fixed bearing (8) or is supported on a fixed bearing (8).

7. Injection system (2) which serves in particular for mixture-compressing, applied-ignition internal combustion engines, having at least one fluid-conducting component (11), at least one component (5) configured as a metering valve (16, 18), and a vibration damping arrangement (1) according to any one of Claims 1 to 6.

## Revendications

1. Ensemble d'amortissement de vibrations (1) pour des systèmes d'injection (2) de véhicules automobiles, comprenant au moins un élément actionneur pouvant être piloté activement (3) et qui est disposé sur un composant (5, 5') du système d'injection (2), l'élément actionneur (3) étant disposé sur le composant (5, 5') de telle sorte qu'en cours de fonctionnement du système d'injection (2), une réduction de vibrations du système d'injection (2) est obtenue au moyen d'un pilotage actif de l'élément actionneur (3),
un dispositif de commande (9) étant prévu qui, en cours de fonctionnement du système d'injection (2), sert au pilotage actif de l'élément actionneur (3), et le dispositif de commande (9) étant configuré de telle sorte qu'en cours de fonctionnement du système d'injection (2), au moyen du pilotage actif de l'élément actionneur (3), une réduction de vibrations du système d'injection (2) est obtenue qui permet un amortissement d'un rayonnement acoustique du système d'injection (2) et/ou une réduction au moins d'une charge de vibration du système d'injection (2),
**caractérisé en ce que** l'élément actionneur pouvant être piloté activement (3) est disposé entre le manchon (13, 14) d'une rampe à carburant (11) et un raccord (15, 17) d'une soupape de dosage (16, 18).

2. Ensemble d'amortissement de vibrations selon la revendication 1, **caractérisé en ce qu'**un appareil de commande d'injection (25) est prévu pour le système d'injection (2) et sert à piloter au moins une soupape de dosage (16, 18) du système d'injection (2) et/ou à détecter au moins un paramètre de fonctionnement (p) du système d'injection (2), **en ce que** le dispositif de commande (9) est intégré dans l'appareil de commande d'injection (25), et **en ce que** le dispositif de commande (9) pilote l'élément actionneur (3) en fonction du pilotage de la soupape de dosage (16, 18) et/ou du paramètre de fonctionnement (p) du système d'injection (2).

3. Ensemble d'amortissement de vibrations selon la revendication 1 ou 2, **caractérisé en ce que** le raccord (15, 17) de la soupape de dosage (16, 18) est accroché au manchon (13, 14) de la rampe à carburant (11) au moyen de l'élément actionneur pouvant être piloté activement (3).

4. Ensemble d'amortissement de vibrations selon l'une quelconque des revendications 1 à 3, **caractérisé en ce qu'**un élément actionneur pouvant être piloté activement (3) est disposé librement sur une face extérieure (38) d'un composant conducteur de fluide (11) .

5. Ensemble d'amortissement de vibrations selon l'une quelconque des revendications 1 à 4, **caractérisé en ce qu'**un élément actionneur pouvant être piloté activement (3) est disposé en appui sur une face extérieure (38) d'un composant conducteur de fluide (11) et/ou sur ou dans un support (22) du système d'injection (2) .

6. Ensemble d'amortissement de vibrations selon la revendication 5, **caractérisé en ce que** l'élément actionneur pouvant être piloté activement (3) est en appui sur un support (22) relié à un palier fixe (8) ou sur un palier fixe (8).

7. Système d'injection (2) servant en particulier à des moteurs à combustion interne à allumage commandé extérieurement et à compression de mélange, comprenant au moins un composant conducteur de fluide (11), au moins un composant (5) réalisé sous forme de soupape de dosage (16, 18) et un ensemble d'amortissement de vibrations (1) selon l'une quelconque des revendications 1 à 6.
